# EUROPEAN PATENT SPECIFICATION

(11) **EP 3 589 113 B1**
(45) Date of publication and mention of the grant of the patent: **07.04.2021**
(21) Application number: 17716625.3
(22) Date of filing: 28.02.2017
(51) Int. Cl.: A01G 7/04

(54) **LIGHTING DEVICE FOR PLANT GROWTH**
BELEUCHTUNGSVORRICHTUNG FÜR PFLANZENWACHSTUM
DISPOSITIF D'ÉCLAIRAGE POUR UNE CROISSANCE VÉGÉTALE

(43) Date of publication of application: 08.01.2020
(73) Proprietor: Innovation Green Technology S.r.l., 88100 Catanzaro (CZ) (IT)
(72) Inventor: FABIANO, Roberto, 88100 Catanzaro (CZ) (IT); SPINA, Emanuele, 88046 Lamezia Terme (CZ) (IT)
(74) Representative: Scarfone, Maria Adelaide
(86) International application number: PCT/IB2017/051161
(87) International publication number: WO 2018/158610

(56) References cited:
- EP-A1- 1 574 126
- WO-A1-2009/141287
- WO-A1-2011/131197
- WO-A1-2016/118175
- CN-A- 102 635 797
- CN-U- 201 897 098
- US-A1- 2002 198 575
- US-A1- 2009 199 470

## Description

The present invention is related to a lighting device for plant growth.

In particular, the present invention is related to a lighting device for plant growth, of the type used for photosynthesis stimulation.

As it is known, photosynthesis is a chemical process that enables plants growth and survival. Through this process, plant pigments absorb the light energy and transmit it to specific pairs of chlorophyll to activate the production of organic substances, mainly the vital carbohydrates, such as atmospheric carbon dioxide and metabolic water.

The photosynthesis takes place substantially in two phases: the dependent light phase (or light phase) and the carbon fixation phase. While the carbon fixation phase consists in the incorporation of carbon dioxide into organic compounds due to the ATP derived from the light phase, in the latter, the molecules of chlorophyll-A dominant in it, selectively absorb the light energy in red and blue-violet portions of visible spectrum, through a series of adjuvants pigments, required respectively to flowering and growth.

Although only said two light energy portions are useful, the spectrum of daylight extends continuously from ultraviolet to infrared, including between these two extremes, the spectrum of visible light composed of violet, blue, green, yellow and red; also, the spectrum fluctuate depending on weather conditions, geographical location and daytime. That's the reason why in recent years artificial lighting systems containing radiation predominantly composed by red and blue spectral bands have become very popular for the cultivation of plants WO2009/141287A1, CN201897098U, US2009/0199470A1, CN102635797B and US2002/0198575A1 disclose examples of a lighting device for plant growth, wherein the grow light emitted consists of red and blue light.

However, although these known systems have contributed to the development and optimization of plant cultivation, they are not able to control and focus the light beam accurately, therefore suffering the problem of obtaining a low percentage of plants containing a good yield of growth and flowering.

Purpose of the invention is to provide a lighting device for plant growth that guarantees a homogeneous distribution of the light beam, with precise real time control of the amount of light energy emitted and, therefore, having characteristics such as to overcome the limits that still affect the previously described system with reference to the prior art.

According to the present invention, a lighting device for plant growth is realized, as defined in claim 1.

For a better understanding of the present invention a preferred embodiment is described, as a non-limiting example, with reference to the enclosed drawings, in which:
- figure 1 shows a disassembled schematic view of a lighting device for plant growth, according to the invention;
- figure 2 shows a bi-dimensional schematic view of a LED module of the lighting device for plant growth, according to the invention;
- figure 3 shows a block diagram of a light beam control apparatus of the lighting device for plant growth, according to the invention;
- figures 4a-4b show respectively frontal and three-dimensional schematic views of the lighting device for plant growth, according to the invention.

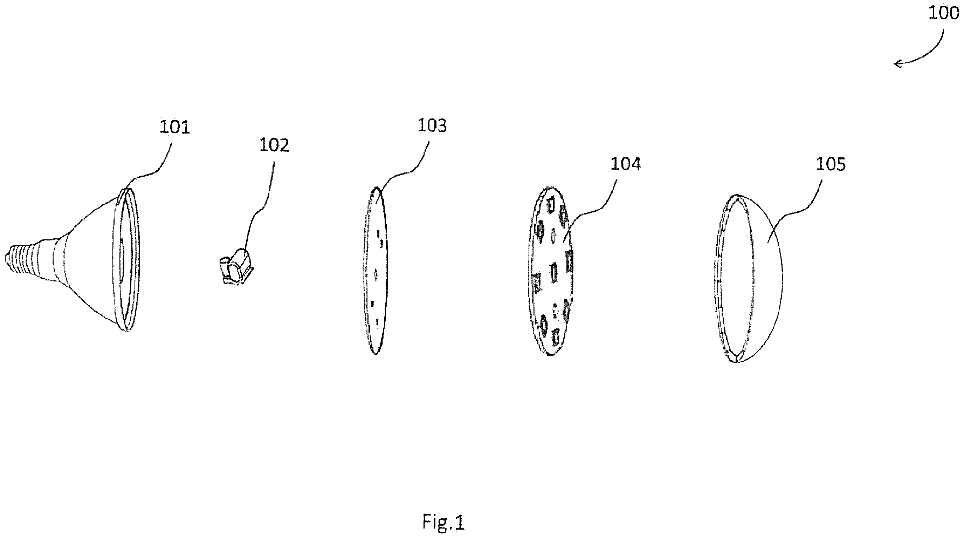

With reference to those figures, and in particular to figure 1, a lighting device for plant growth is shown, according to the invention.

More in detail, the lighting device 100 for plant growth comprises a casing 101 with a screw connection, a LED module 104 comprised into the casing 101 and held by a support 103, a control apparatus 102 for controlling the light beam emitted by the LED module 104, and an optical module 105 to cover the casing 101, the control apparatus 102, the support 103 and the LED module 104.

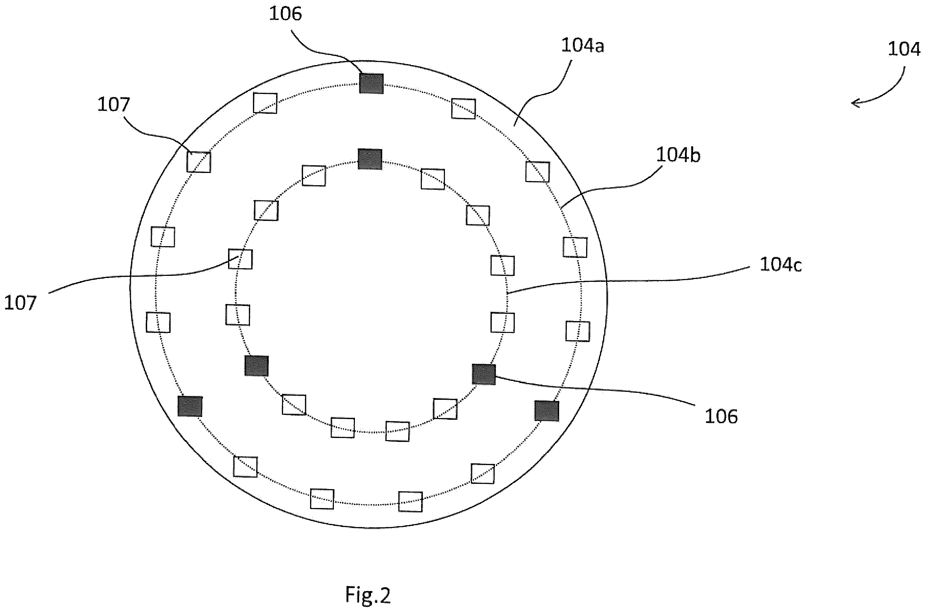

According to the invention, the LED module 104, shown in detail in figure 2, comprises a circular PCB support 104a housing a first group of LED light sources 104b arranged on a first peripheral circumference of the circular support 104a and a second group of LED light sources 104c arranged on a second circumference inner to the first one, so that the first group of LED light sources 104b is concentric to the second group of LED light sources 104c.

According to the invention, both the first group of LED sources 104b and the second group of LED light sources 104c comprise a plurality of blue light LEDs 106 and a plurality of red light LEDs 107. More specifically, preferably according to the invention, each group of LED sources 104b and 104c is constituted by three blue light LEDs 106 and twelve red light LEDs 107 , arranged so that, according to the invention, four red light LEDs 107 are alternated to one blue light LED 106 , according to a ratio 4:1.

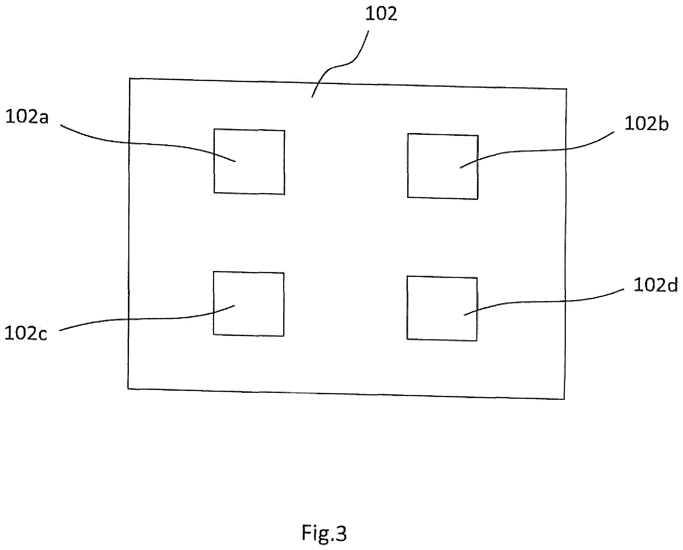

According to an aspect of the invention, as shown in figure 3, the control apparatus 102 comprises a transformer 102a, a rectifier 102b, a voltage stabilizer 102c and a control circuit 102d.

When operating, the transformer 102a performs a first adaptation of the network electrical voltage to the power supply of the device 100 and, in particular, lowers the voltage level from 220 Volt to approximately 58 Volt. Subsequently, through the rectifier 102b, for example consisting in a diode bridge and a series of electrical capacitors, the alternating current is transformed into direct current while through the stabilizer 102c the voltage is lowered and stabilized from 58 Volts to 53,5 Volts, that is the operation value of LEDs 106 and 107. Then, the control circuit 102d, for example consisting of ferromagnetic toroids, gathers the value of current flowing through it at an optimized value, for example 0.28 Ampere.

Advantageously according to the invention, the control apparatus 102 is configured to provide an electronic power to LEDs 106 and 107 such that LEDs 106, 107 always absorb the same current value.

According to the invention, the control apparatus 102 is configured to set the light beam emitted by the LEDs 106 and 107 at a constant frequency and light intensity.

Advantageously according to the invention, the control apparatus 102 is configured to protect the LEDs 106, 107 from overheating.

Furthermore, the control apparatus 102 is configured to allow an alternation of red light and blue light optimized to promote growth but within the limits of a too early growth which would lead to an abnormal form of the plant, for example, obtaining a too long or too open plant form. In fact, the red promotes the production of growth hormone and the blue promotes the strengthening of the same, a larger flower and more pronounced colors.

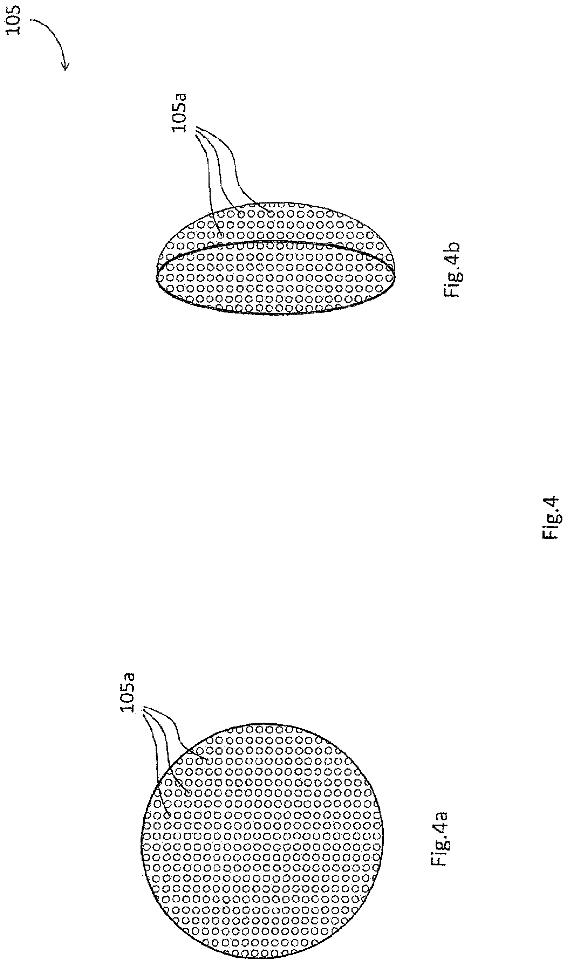

According to an aspect of the invention, the optical module 105 is configured to concentrate the emitted light beam of the LEDs 106 and 107 and make it homogeneous. In particular, as shown in figures 4a-4b, the optical module 105 comprises a plurality of micro modules 105a configured to split the light beams emitted by the LEDs 106, 107 into a plurality of micro-beams of light that, accordingly, are mixed between them within the module 105. In fact the module 105 is able to combine appropriately the light beam emitted directly by LED 106, 107 with beams of light reflected inside the casing 101.

Therefore, the lighting device for plant growth according to the invention is able to ensure the emission of a light beam without variations of frequency, temperature and light intensity.

Another advantage of the lighting device for plant growth according to the invention, consists in the fact that it is able to generate a light beam having a right combination of red and blue spectrum for the stimulation of photosynthesis and therefore favors the production of plant growth hormone through the red spectrum and the strengthening and larger flowering and stronger colors through the blue spectrum.

Another advantage of the lighting device for plant growth according to the invention is that it is able to enhance plants growth.

Finally, the lighting device for plant growth according to the invention is easy to use and it is low cost.

It is clear that the lighting device for plant growth here described and illustrated can be modified and varied without departing from the protective scope of the present invention, as defined in the enclosed claims.

## Claims

1. Lighting device (100) for plant growth comprising:
- a casing (101) housing a LED module (104) held by a support (103),
- a control apparatus (102) for controlling the light beam emitted by the LED module (104), and
- an optical module (105) to cover the LED module (104) and directing the light beam controlled by the control apparatus (102),
wherein the LED module (104) comprises a circular support (104a) housing a first group of LED light sources (104b) arranged on a first peripheral circumference of the circular support (104a) and a second group of LED light sources (104c) arranged on a second circumference inner to the first one,
wherein the first group of LED light sources (104b) and the second group of LED light sources (104c) comprise a plurality of blue light LEDs (106) and a plurality of red light LEDs (107),
wherein the groups of LED light sources (104b, 104c) are arranged so that four red light LEDs (107) are alternated to one blue light LED (106),
wherein the control apparatus (102) is configured
to set the light beam emitted by the LEDs (106, 107)
at a constant frequency and light intensity.

2. Lighting device (100) for the growth of plants according to claim 1, **characterized in that** the control apparatus (102) comprises a transformer (102a), a rectifier (102b), a voltage stabilizer (102c) and a control circuit (102d).

3. Lighting device (100) for the growth of plants according to claim 1, **characterized in that** the optical module (105) comprises a plurality of micro modules (105a) configured to split the light beams emitted by the LEDs (106, 107) into a plurality of micro-beams of light.

## Patentansprüche

1. Beleuchtungsgerät (100) für das Wachstum von Pflanzen, das Folgendes umfasst:
- ein Gehäuse (101), in dem sich ein LED-Modul (104) befindet, das von einem Träger (103) gehalten wird,
- ein Steuerungsgerät (102) zum Steuern des vom LED-Modul (104) emittierten Lichtstrahls, und
- ein optisches Modul (105), das das LED-Modul (104) abdeckt und den vom Steuerungsgerät (102) gesteuerten Lichtstrahl lenkt,
wobei das LED-Modul (104) einen kreisförmigen Träger (104a) umfasst, auf dem sich eine erste Gruppe von an einem ersten Umfang des kreisförmigen Trägers (104a) angeordneten LED-Lichtquellen (104b) sowie eine zweite Gruppe von an einem zweiten Umfang innerhalb des ersten Umfangs angeordneten LED-Lichtquellen (104c) befindet.
wobei die erste Gruppe von LED-Lichtquellen (104b) und die zweite Gruppe von LED-Lichtquellen (104c) mehrere Blaulicht-LEDs (106) und Rotlicht-LEDs (107) umfassen,
wobei die Gruppen von LED-Lichtquellen (104a, 104c) so angeordnet sind, dass auf jeweils vier Rotlicht-LEDs (107) eine Blaulicht-LED (106) folgt,
wobei das Steuerungsgerät (102) den von den LEDs (106, 107) emittierten Lichtstrahl auf eine konstante Frequenz und Lichtintensität einstellt.

2. Beleuchtungsgerät (100) für das Wachstum von Pflanzen gemäß Anspruch 1, das sich dadurch auszeichnet, dass das Steuerungsgerät (102) einen Transformator (102a), einen Gleichrichter (102b), einen Spannungsstabilisator (102c) und eine Steuerungsschaltung (102d) umfasst.

3. Beleuchtungsgerät (100) für das Wachstum von Pflanzen gemäß Anspruch 1, das sich dadurch auszeichnet, dass das optische Modul (105) mehrere Mikromodule (105a) umfasst, die die von den LEDs (106, 107) emittierten Lichtstrahlen in mehrere Mikro-Lichtstrahlen aufteilen.

## Revendications

1. Dispositif d'éclairage (100) destiné à la croissance des plantes comprenant :
- un boîtier (101) logeant un module LED (104) maintenu par un support (103),
- un appareil de commande (102) pour commander un faisceau lumineux émis par le module LED (104), et
- un module optique (105) pour recouvrir le module LED (104) et pour diriger le faisceau lumineux commandé par l'appareil de commande (102),
dans lequel le module LED (104) comprend un support (104a) circulaire logeant un premier groupe de sources lumineuses LED (104b) disposées sur une première circonférence périphérique du support (104a) circulaire et un second groupe de sources lumineuses LED (104c) disposées sur une seconde circonférence interne à la première,
dans lequel le premier groupe de sources lumineuses LED (104b) et le second groupe de sources lumineuses LED (104c) comprennent une pluralité de LED à lumière bleue (106) et une pluralité de LED à lumière rouge (107),
dans lequel les groupes de sources lumineuses DEL (104a, 104c) sont disposés de telle sorte que quatre DEL à lumière rouge (107) alternent avec une DEL à lumière bleue (106),
dans lequel l'appareil de commande (102) est conçu pour régler le faisceau lumineux émis par les LED (106, 107) à une fréquence et une intensité lumineuse constantes.

2. Dispositif d'éclairage (100) destiné à la croissance des plantes selon la revendication 1, **caractérisé en ce que** l'appareil de commande (102) comprend un transformateur (102a), un redresseur (102b), un stabilisateur de tension (102c) et un circuit de commande (102d).

3. Dispositif d'éclairage (100) destiné à la croissance des plantes selon la revendication 1, **caractérisé en ce que** le module optique (105) comprend une pluralité de micro modules (105a) conçus pour diviser les faisceaux lumineux émis par les LED (106, 107) en une pluralité de micro faisceaux lumineux.
